# EUROPEAN PATENT APPLICATION

(11) **EP 3 838 362 A1**
(43) Date of publication of application: **23.06.2021**
(21) Application number: 20151154.0
(22) Date of filing: 10.01.2020
(51) Int. Cl.: A63H 33/28

(54) **BUBBLE MACHINE**

(30) Priority: 18.12.2019 CN 201911306417
(71) Applicant: Shenzhen Qiaohua Industries Limited, Bao An, Shenzhen 518127 (CN)
(72) Inventor: YANG, Ruishi, Shenzhen (CN)
(74) Representative: Sach, Greg Robert

(57) **Abstract**

The present invention provides a bubble machine, comprising a housing, a film forming device in the housing, an air supply device, and a cavity. The film forming device comprises at least one film forming unit, the cavity is provided with at least one air supply channel, an air inlet end of the air supply channel is close to the air supply device, an air outlet end of the air supply channel is close to the film forming unit, an air flow generated by the air supply device flows through the air supply channel to the film forming unit, and the air flow flows through the air supply channel and forms a laminar air flow. The amount and size of bubbles generated by the bubble machine according to the present invention are more uniform.

## Description

### TECHNICAL FIELD

The present invention relates to a bubble machine.

### BACKGROUND

It should be noted that not all of the content described in the background represents the prior art.

A bubble machine is popular because of producing bubbles. In addition to being used in children's toys, a bubble machine is also widely used to render the atmosphere of the stage. The existing bubble machine has different bubble volumes and non-uniform bubble volumes. When being used to render the atmosphere of the stage, it will affect the rendering effect.

### SUMMARY

In view of this, in order to solve one of the technical problems in the related technology to a certain extent, it is necessary to provide a bubble machine capable of making the amount and size of bubbles more uniform.

The present invention provides a bubble machine, comprising a housing, a film forming device in the housing, an air supply device, and a cavity. The film forming device comprises at least one film forming unit, the cavity is provided with at least one air supply channel, an air inlet end of the air supply channel is close to the air supply device, an air outlet end of the air supply channel is close to the film forming unit, an air flow generated by the air supply device flows through the air supply channel to the film forming unit, and the air flow flows through the air supply channel and forms a laminar air flow.

When the above solution is adopted, after the turbulent air flow generated by the air supply device becomes laminar air flow in the air supply channel, the turbulent air flow can be blown to the film forming unit with a more continuous and stable air flow, so that the size and the bubble forming speed of bubbles are uniform.

### BRIEF DESCRIPTION OF THE DRAWINGS

FIG. 1 is a schematic diagram illustrating a three-dimensional structure according to an embodiment of the present invention.
FIG. 2 is an exploded schematic diagram of FIG. 1.
FIG. 3 is a schematic diagram illustrating a simplified structure of FIG. 1.
FIG. 4 is a schematic diagram of the present invention.
FIG. 5 is a schematic diagram illustrating a structure of an embodiment of a liquid storage cavity of the present invention.
FIG. 6 is a schematic diagram illustrating a structure of an embodiment of a film forming unit of the present invention.
FIG. 7 is a schematic diagram illustrating bubbles blown out using the film forming unit shown in FIG. 6.
FIG. 8 is a schematic flow diagram of a turbulent air flow.
FIG. 9 is a schematic diagram illustrating a structure of a first embodiment of an air supply channel according to the present invention.
FIG. 10 is a schematic diagram illustrating a structure of a second embodiment of an air supply channel according to the present invention.
FIG. 11 is a schematic diagram illustrating a structure of a third embodiment of an air supply channel according to the present invention.
FIG. 12 is a schematic flow diagram illustrating a laminar air flow.
FIG. 13 is a diagram illustrating various structures of an air surface.

The following specific embodiments will further explain the present invention with reference to the above drawings.

### DESCRIPTION OF THE EMBODIMENTS

Hereinafter, the technical solutions in the embodiments of the present invention will be clearly and completely described with reference to the drawings in the embodiments of the present invention. Obviously, the described embodiments are merely a part of the embodiments of the present invention, rather all of the embodiments. Based on the embodiments of the present invention, all other embodiments obtained by those skilled in the art without creative efforts shall fall within the protection scope of the present invention. It can be understood that the drawings are only provided for reference and description, and are not intended to limit the present invention. The connection relationship shown in the drawings is merely for convenience of clear description, rather than limit the connection manner.

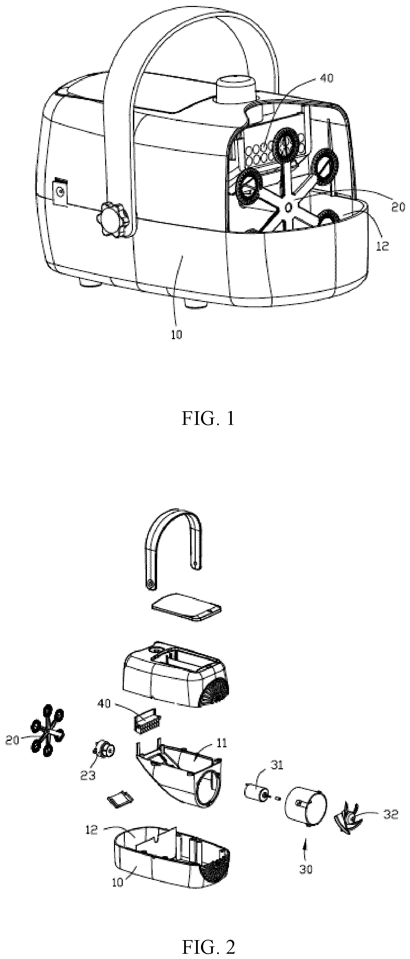

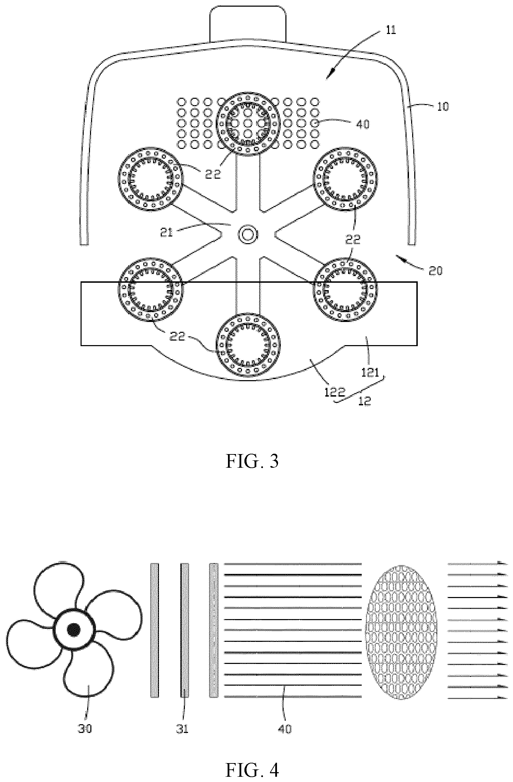

Refer to FIGS. 1-4. A bubble machine according to an embodiment of the present invention comprises a housing 10, a film forming device 20, an air supply device 30, and a control device, wherein the film forming device 20, the air supply device 30, and the control device may be in the housing 10. The housing 10 has a cavity 11 and a liquid storage cavity 12. The cavity 11 may also be formed by a separately molded inner housing. The cavity 11 is used to install a later-mentioned air supply channel 40. A filter device 31 (for example, a filter screen can be added) is provided between the air supply channel 40 and the air supply device 30 to prevent the air flow flowing through the film forming unit 22 from entraining impurities. The liquid storage chamber 12 is used for storing bubble liquid.

In this embodiment, the film forming device 20 comprises a motor 23, a support 21, and a film forming unit 22 provided on the support 21. The motor 23 drives the support 21 to rotate, so that the film forming unit 22 can enter the liquid storage chamber 12 and be immersed in the bubble liquid to form a bubble film. In order to increase the amount of bubbles generated per unit time, a plurality of film forming units 22 may be provided and distributed on the support 21. For example, the film forming units may be distributed in a circular array.

The air supply device 30 may comprise a rotating motor 31 and a fan blade 32, and the like. The control device is used to control the air supply device 30 (comprising a switch and/or an air volume) and the working state of the motor 23 (comprising a switch and/or speed, etc.). The air supply device 30 may be a fan or an air blower.

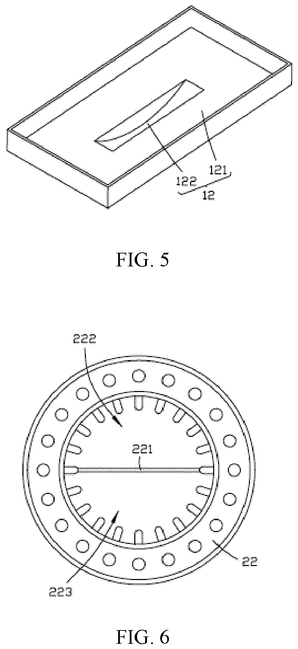

Referring to FIG. 5, the liquid storage chamber 12 may comprise a main chamber 121 and an auxiliary chamber 122. The auxiliary chamber 122 is located below the main chamber 121 and communicates with the main chamber 121. Specifically, the top end of the auxiliary chamber 122 is an opening, and the opening is located on the bottom surface of the main chamber 121 and communicates with the main chamber 121. The cross section of the auxiliary chamber 122 is smaller than that of the main chamber 121. The vertical section of the auxiliary chamber 122 is smaller than the vertical section of the main chamber 121. Specifically, the auxiliary chamber 122 is generally arcuate, and the bottom surface of the auxiliary chamber 122 is arc, which can be substantially the same as the circular path of the film forming unit 22 rotating around the center of rotation. The thickness of the auxiliary chamber 122 is slightly larger than that of the film forming unit 22, so that the film forming unit 22 can rotate and enter the main chamber 121 and the auxiliary chamber 122 in sequence, and then exit from the auxiliary chamber 122. When the bubble liquid is continuously consumed and the liquid level is lowered, the bubble liquid will flow into the auxiliary chamber 122 and will be converged. Because the volume of the auxiliary chamber 122 is relatively small, the auxiliary chamber does not need too much bubble liquid to fill. When the amount of bubble liquid in the main chamber 121 is relatively small, the bubble liquid in the auxiliary chamber 122 can also well submerge the film forming unit 22 to form a film, which can not only avoid the waste of bubble liquid, but also increase the use time after a single injection of bubble liquid.

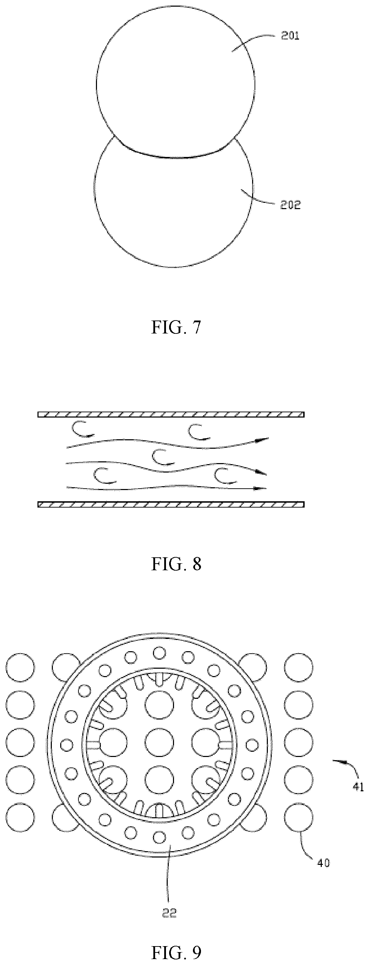

In this embodiment, as shown in FIG. 6, a separating strip 221 is provided in the middle of the film forming unit 22 to separate the film forming gap of the film forming unit 22 into a first film forming gap 222 and a second film forming gap 223. In this way, when blowing bubbles, the first film forming gap 222 and the second film forming gap 223 can form bubbles respectively. That is, one film forming unit 22 can form two bubbles. However, since the distance between the first film forming gap 222 and the second film forming gap 223 is small (the distance is only the separating strip 221), in the process that the bubble film in the first film forming gap 222 and the bubble film in the second film forming gap 223 are blown to form bubbles, two bubbles will be adsorbed and integrated. That is, an integrated bubble comprises two independent small bubbles 201 and 202, and the bubble structure is as shown in FIG. 7. Specifically, the separating strip 221 can evenly separate the film forming gap of the film forming unit 22. That is, the first film forming gap 222 and the second film forming gap 223 are the same. When the amount and speed of the air flow flowing through the first film forming gap 222 and the second film forming gap 223 are the same, the size of the two small blocked bubbles that are blown out at this time are basically the same.

It should be noted that when the existing bubble machine blows bubbles, the air flow generated by the air supply device 30 is directly blown into the corresponding position of the film forming unit 22 through the cavity 11. The applicant found that due to the shape, size, distance of the cavity 11 of the existing bubble machine, and the reason that the air supply device 30 forms the air source itself, the air flow is turbulent. The flow path can be seen in FIG. 8. The movement of the turbulent air flow is chaotic. Therefore, when the turbulent air flow flows through the film forming unit 22, the air speed and angle are different at different time periods and positions, so that the amount and the size of the blown bubbles are non-uniform.

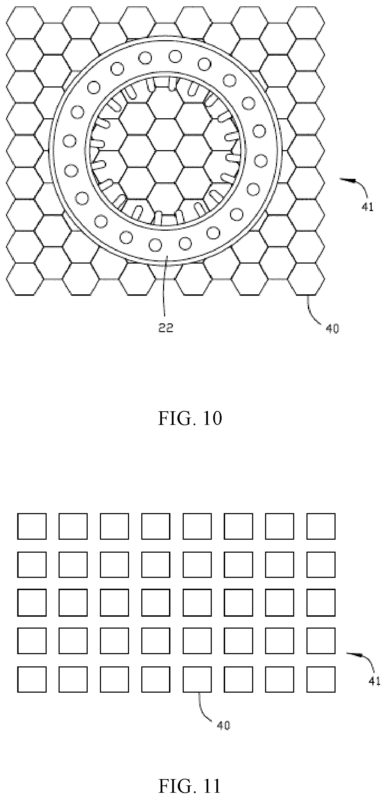

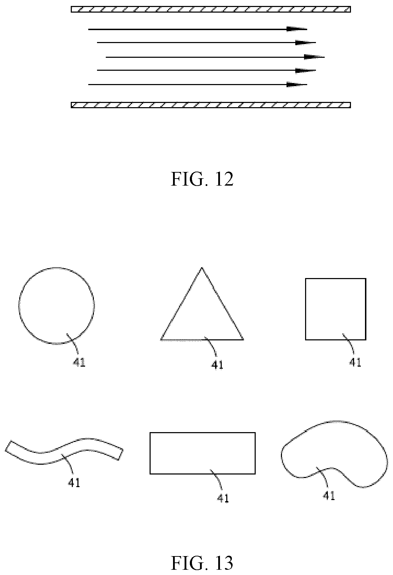

In the embodiment of the present invention, referring to FIGS. 1-4, at least one air supply channel 40 is provided in the cavity 11. As shown in FIGS. 9-11, the cross section of the air supply channel 40 may be circular or regular polygon. The air inlet end of the air supply channel 40 is close to the air supply device 30, and the air outlet end of the air supply channel 40 is close to the film forming unit 22. The air flow generated by the air supply device 30 can enter the air supply channel 40 from the air inlet and form a laminar air flow in the air supply channel 40. The laminar air flow flows out of the air outlet. In the process that the motor 23 drives the support 21 to rotate, the bubble film formed on the film forming unit 22 can be blown into bubbles. The laminar air flow is as shown in FIG. 12. The flow rate and the flow direction of the laminar air flow at different angles and times are stable, so that the size and the amount of the blown bubbles are uniform.

Reynolds number Re = ρvd/µ, where v, p, and µ are the air velocity, density, and viscosity coefficient, respectively, and d is the diameter of the air supply channel 40 (when the air supply channel 40 is a circular tube). In general, the density and the viscosity coefficient of the air flow used by the bubble machine are the same. Therefore, the Reynolds number can be adjusted by changing the diameter of the air supply channel 40 and changing the speed of the air flow generated by the air supply device 30, so that the Reynolds number is less than a certain value so that the air flow is laminar.

In this embodiment, referring to FIGS. 9-11, a plurality of air supply channels 40 are provided in the cavity 11, wherein the air outlets of the plurality of air supply channels 40 are provided adjacent to each other. For example, the air outlets may be adjacently provided into a single row or into a plurality of parallel rows, or may be provided to be surrounded layer by layer. In this way, one end of the plurality of air supply channels 40 close to the film forming unit 22 forms an air surface 41. As shown in FIG. 12, the air surface may be of any shape, for example, it may be rectangular, square, circular, triangular, stripe, or irregular shapes. In this embodiment, the air supply channels 40 may be provided adjacent to each other so that the air outlets of the plurality of air supply channels 40 are provided adjacent to each other and the air inlets are provided adjacent to each other.

In this embodiment, the air supply channel40 may be linear. In this embodiment, the area of the air outlet of a single of the air supply channels 40 is smaller than that of the film forming gap of the film forming unit 22. In this embodiment, the area of the air inlet of a single of the air supply channels 40 is smaller than that of the air outlet surface of the air supply device 30.

The above description is merely the preferred embodiments of the present invention and is not intended to limit the present invention. Any modification, equivalent replacement, and improvement made within the spirit and principle of the present invention shall be included in the protection scope of the present invention.

## Claims

1. A bubble machine, comprising a housing, a film forming device in the housing, an air supply device, and a cavity, wherein the film forming device comprises at least one film forming unit, wherein the cavity is provided with at least one air supply channel, an air inlet end of the air supply channel is close to the air supply device, an air outlet end of the air supply channel is close to the film forming unit, an air flow generated by the air supply device flows through the air supply channel to the film forming unit, and the air flow flows through the air supply channel and forms a laminar air flow.

2. The bubble machine according to claim 1, wherein a separating strip is provided in the middle of the film forming unit to separate the film forming gap of the film forming unit into a first film forming gap and a second film forming gap.

3. The bubble machine according to claim 2, wherein the separating strip evenly separates the film forming gap.

4. The bubble machine according to claim 1, comprising a plurality of air supply channels, and the air outlets of the plurality of air supply channels are provided adjacent to each other, so that one end of the plurality of air supply channels close to the film forming unit forms an air surface.

5. The bubble machine according to claim 4, wherein the plurality of air supply channels are provided adjacent to each other.

6. The bubble machine according to claim 4, wherein the air supply channel is linear.

7. The bubble machine according to claim 4, wherein the area of the air outlet of a single of the air supply channels is smaller than that of the film forming gap of the film forming unit.

8. The bubble machine according to claim 4, wherein the area of the air inlet of a single of the air supply channels is smaller than that of the air outlet surface of the air supply device.

9. The bubble machine according to claim 4, wherein the area of the air surface is larger than that of the film forming gap of the film forming unit and the air surface is capable of covering the film forming gap of the film forming unit.

10. The bubble machine according to any one of claims 1 to 9, wherein the cross section of the air supply channel is circular or regular polygon.
